# EUROPÄISCHE PATENTANMELDUNG

(11) **EP 1 437 040 A1**
(43) Veröffentlichungstag der Anmeldung: **14.07.2004**
(21) Anmeldenummer: 04405003.7
(22) Anmeldetag: 05.01.2004
(51) Int. Cl.: A01B 1/22, B25G 3/20

(54) **Verbindungselement**

(30) Priorität: 08.01.2003 CH 272003
(71) Anmelder: Ammann AG, 8274 Tägerwilen (CH)
(72) Erfinder: Pichelin, Frédéric, Dr., 3044 Säriswil (CH); Ettlin, Toni, 2504 Biel (CH); Ammann, Paul, Jr., 8274 Tägerwilen (CH)
(74) Vertreter: Gachnang, Hans Rudolf

(57) **Zusammenfassung**

Das Verbindungselement (1) umfasst einen konischen Körper (3) aus Metall oder Aluminium, welcher mit dem Ende eines Stiels unlösbar und mit einem Gartengerät lösbar verbindbar ist. Die Oberfläche der Tülle (3) ist von Rillen (7) durchsetzt. Die zu den Rillen (7) benachbarten konischen Mantelflächen (5) bilden die Kontakt- und Auflagefläche in einer Aufnahmebohrung am Gartengerät.

## Beschreibung

Gegenstand der Erfindung ist ein Verbindungselement zwischen einem Stiel aus Holz und einem Gartengerät aus Metall gemäss Oberbegriff des Patentanspruchs 1.

Verbindungselemente zwischen Holz- oder Kunststoffstielen und Arbeitsgeräten sind in verschiedenen Ausführungen bekannt. Sie dienen dazu, den Stiel wieder lösbar, jedoch festsitzend mit dem Arbeitsgerät zu verbinden. In der einfachsten Ausführung ist das untere Stielende als konischer Abschnitt ausgeformt, welcher in eine entsprechend konisch ausgebildete Aufnahme am Werkzeug einschiebbar und mit diesem durch Befestigungsmittel, wie Nägel, Nieten oder Schrauben, verbindbar ist. Solche Verbindungen haben den Nachteil, dass bei geringer Luftfeuchtigkeit das Holz des Stieles schwindet und dadurch die satte spielfreie Verbindung zum Werkzeug gelöst wird. Dies führt nach kurzer Benutzungszeit zu einer weiter zunehmenden Vergrösserung des Spiels zwischen Werkzeug und Stiel und einem Ausleiern der Verbindung (Nieten, Schrauben etc.).

Es ist weiter bekannt, zwischen Stiel und Werkzeug eine Tülle aus Metall einzusetzen und diese mit dem Stiel zu verbinden. Wenn diese Tülle aus einem konisch geformten Blech besteht, können die oben beschriebenen Nachteile wegen des Schwunds des Holzes nicht behoben werden. Auch vollflächige konisch verlaufende Tüllen lassen sich nur mit Mühe spielfrei in der entsprechenden Öffnung des Werkzeugs dauerhaft verankern. Minimale Abweichungen in der Konizität oder des Querschnitts, sei es in axialer wie auch in radialer Richtung, führen zu unbefriedigenden Verbindungen der beiden Elemente Stiel und Werkzeug.

Aufgabe der vorliegenden Erfindung ist die Schaffung eines Verbindungselements, welches eine dauerhafte spielfreie Verbindung zwischen Stiel und Werkzeug sicherstellt.

Gelöst wird diese Aufgabe durch ein Verbindungselement gemäss den Merkmalen des Patentanspruchs 1. Vorteilhafte Ausgestaltungen der Erfindung sind in den abhängigen Ansprüchen definiert.

Es gelingt, durch axial, radial oder in beiden Richtungen verlaufende Rillen in der Oberfläche der konusförmigen Mantelfläche eine einwandfreie Klemmverbindung zwischen Stiel und Werkzeug zu erlangen. In den Bereichen der Rillen, d.h. zwischen den Rippen, in denen kein Kontakt zwischen dem Verbindungselement und der Aufnahmebohrung am Werkzeug besteht, kann letzteres sich ergeben, d.h. es wird beim Zusammenführen der beiden Teile Stiel/Verbindungselement eine elastische Verformung des Aufnahmeteils am Werkzeug herbeigeführt, welches zu einer dauerhaften Klemmung der beiden Teile führt.

Anhand illustrierter Ausführungsbeispiele wird die Erfindung näher erläutert. Es zeigen
- Figur 1: eine perspektivische Darstellung eines konischen Verbindungselementes mit axial verlaufenden Rillen mit sichtbarer gemachter Stielbohrung,
- Figur 2: ein Verbindungselement mit einem zylindrischen Abschnitt im Bereich der Stielbohrung und axial verlaufenden Rillen,
- Figur 3: ein Verbindungselement mit radial umlaufenden Rillen und Stielaufnahmebereich,
- Figur 4: ein weiteres Verbindungselement mit radial umlaufenden Rillen und Stielaufnahmebereich,
- Figur 5: ein konisches Verbindungselement mit einer breiten umlaufenden Rille, begrenzt durch elastische Bereiche.

Ein Verbindungselement 1 gemäss der ersten Ausführungsform der Erfindung umfasst einen konischen Körper oder Tülle 3, dessen Mantelfläche 5 durch eine Mehrzahl von Rillen 7 in axialer Richtung unterbrochen ist. Die zwischen den Rillen 7 verbliebenen Bereiche 8 der Mantelfläche 5 fungieren als Kontakt- und Auflageflächen, wenn das Verbindungselement 1 in eine Aufnahmehülse entsprechender Konizität an einem Gartengerät, z.B. einer Schaufel oder einem Spaten, eingeführt und axial beispielsweise durch eine erhöhte Kraft oder einen Hammerschlag eingesetzt wird. Eine Bohrung 9 dient zur Aufnahme eines Nagels, einer Schraube oder eines anderen Fixiermittels, welche durch die Aufnahme am Gartengerät hindurchgeführt wird und zur Sicherung der gegenseitigen Lage von Verbindungselement 1 und Aufnahmehülse. Am weiten Ende 11 des Verbindungselements 1 bzw. dessen Stirnfläche ist eine Bohrung 13 (in gebrochenen Linien dargestellt) eingelassen, welche das Stielende eines Stiels aus Holz oder Kunststoff unlösbar aufnimmt. Die Verbindung zwischen dem Verbindungselement 1 und einem nicht dargestellten Stielende erfolgt vorzugsweise durch einen Klebevorgang. Die Tiefe t der Rillen 7 ist gleich oder grösser als der Abstand einer Sehne zwischen den beiden Rillenkanten 7' und 7" und der gedachten Kreisbogenlinie, d.h. der Höhe des Kreisabschnitts an der Rille 7.
Alternativ zur Ausbildung von Rillen 7 in der Oberfläche des Verbindungselements 1 können auf der Oberfläche Rippen aufgebracht sein, welche den Bereichen 8 der Mantelfläche 5 entsprechen und als Kontaktflächen dienen. Die Rillen 7 oder die Rippen können auch schraubenlinienförmig verlaufen (keine Abb.).

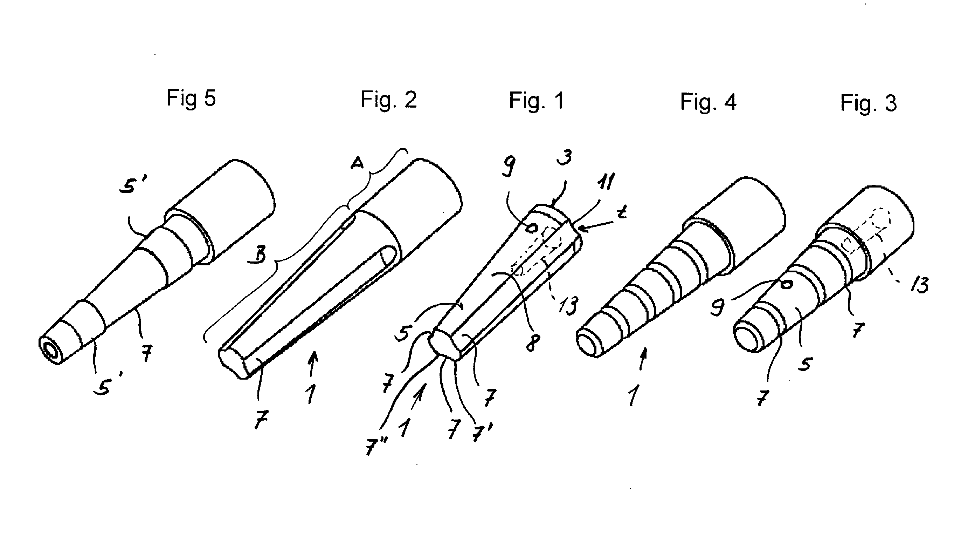

In der Ausgestaltung des Verbindungselements 1 gemäss Figur 2 schliesst an den konischen Bereich B mit den Rillen 7 ein zylindrischer Bereich A an. Dieser nimmt die Bohrung 13 für einen Stiel auf. Im übrigen sind die Rillen 7 analog denjenigen im ersten Ausführungsbeispiel ausgeführt. Sie können aber auch anstelle einer Linsenform aus einen rechteckigen Querschnitt aufweisenden Einstichen bestehen (keine Abbildung).

Die Ausgestaltung der Erfindung gemäss Figur 3 umfasst wiederum einen konischen Bereich B, auf dessen Mantelfläche 5 anstelle von axial verlaufenden Rillen umlaufende Rillen 7 ausgebildet sind, zwischen denen konische Mantelflächen 5 vorliegen. Auch diese Ausgestaltung der Erfindung kann einen zylindrischen Abschnitt A umfassen (vgl. Figuren 3 und 4) oder nur aus einem konischen Teil analog Figur 1 bestehen (keine Abb.). Im zylindrischen Abschnitt A ist wiederum die Bohrung 13 für das Stielende eingeformt.

Eine ähnliche Ausgestaltung der Erfindung zeigt Figur 5, in welcher anstelle von in das Verbindungselement 1 eingelassenen Rillen elastische ringförmige Mantelflächen 5' aufgeklebt oder aufgeschrumpft sind. Der Bereich zwischen den beispielsweise zwei Mantelflächen 5' entspricht einer Rille 7.

## Patentansprüche

1. Verbindungselement (1) zwischen einem Stiel aus Holz und einem Gartengerät aus Metall, umfassend einen Körper (3) aus Metall, welche mit dem Stiel unlösbar und mit dem Gartengerät lösbar verbindbar ist, **dadurch gekennzeichnet, dass** der Körper (3) mindestens einen konisch verlaufenden Abschnitt (B) aufweist, dessen konische Mantelfläche (5) von Rillen (7) durchbrochen ist.

2. Verbindungselement nach Anspruch 1, **dadurch gekennzeichnet, dass** die Rillen (7) in Achsrichtung verlaufen.

3. Verbindungselement nach Anspruch 1, **dadurch gekennzeichnet, dass** die Rillen (7) in Umfangsrichtung verlaufen.

4. Verbindungselement nach Anspruch 1, **dadurch gekennzeichnet, dass** die Rillen (7) schraubenlinienförmig verlaufen.

5. Verbindungselement nach einem der Ansprüche 1 bis 4, **dadurch gekennzeichnet, dass** zwischen den Rillen (7) die Mantelbereiche (5) eben oder konusmantelförmig verlaufen.
